# EUROPEAN PATENT APPLICATION

(11) **EP 4 213 429 A1**
(43) Date of publication of application: **19.07.2023**
(21) Application number: 21879281.0
(22) Date of filing: 08.10.2021
(51) Int. Cl.: H04L 5/00

(54) **FEEDBACK INFORMATION TRANSMISSION METHOD, TERMINAL AND NETWORK DEVICE**

(30) Priority: 12.10.2020 CN 202011086024
(71) Applicant: Vivo Mobile Communication Co., Ltd., Dongguan, Guangdong 523863 (CN)
(72) Inventor: LI, Na, Dongguan, Guangdong 523863 (CN); SHEN, Xiaodong, Dongguan, Guangdong 523863 (CN)
(74) Representative: Murgitroyd & Company
(86) International application number: PCT/CN2021/122550
(87) International publication number: WO 2022/078236

(57) **Abstract**

This application discloses a feedback information transmission method, a terminal, and a network device, and pertains to the field of wireless communication technologies. The method includes: receiving, by a terminal, feedback indication information, where the feedback indication information is used to indicate whether the terminal is to transmit target feedback information, the target feedback information is feedback information that is reported by the terminal within a target time window, or the target feedback information is feedback information corresponding to a first downlink transmission that is received by the terminal within the target time window; and in a case that the feedback indication information indicates the terminal to transmit the target feedback information, transmitting the target feedback information.

## Description

### CROSS-REFERENCE TO RELATED APPLICATION

The present invention claims priority to Chinese Patent Application No. 202011086024.5, filed with the China National Intellectual Property Administration on October 12, 2020 and entitled "FEEDBACK INFORMATION TRANSMISSION METHOD, TERMINAL, AND NETWORK DEVICE", which is incorporated herein by reference in its entirety.

### TECHNICAL FIELD

This application pertains to the field of wireless communication technologies, and specifically relates to a feedback information transmission method, a terminal, and a network device.

### BACKGROUND

Compared with previous mobile communication systems, the fifth generation (5th Generation, 5G) mobile communication system needs to adapt to more diverse scenarios and service requirements. For example, major scenarios of new radio (New Radio, NR) include enhanced mobile broadband (Enhanced Mobile Broadband, EMBB), massive machine type communication (massive Machine Type Communication, mMTC), and ultra-reliable and low latency communication (Ultra-Reliable and Low Latency Communications, URLLC). These scenarios impose requirements of high reliability, low latency, large bandwidth, and wide coverage on the 5G mobile communication system.

In some communication scenarios, a terminal needs to report feedback information such as hybrid automatic repeat request acknowledgement (Hybrid Automatic Repeat Request ACK, HARQ-ACK) to a network device, for example, reporting HARQ-ACK feedback for a physical downlink shared channel (Physical Downlink Shared Channel, PDSCH) sent by the network device or for a physical downlink control channel (Physical Downlink Control Channel, PDCCH) sent by the network device for releasing a semi-persistent scheduling PDSCH (Semi-Persistent Scheduling PDSCH, SPS PDSCH).

However, in transmission of feedback information such as HARQ-ACK, there may be problems such as feedback information being discarded due to collisions with DL symbols or transmission of low-priority feedback information being canceled due to overlap with high-priority channels/signals. As a result, the feedback information such as HARQ-ACK cannot be delivered to the network device, affecting communication performance.

### SUMMARY

Embodiments of this application provide a feedback information transmission method, a terminal, and a network device, which can effectively resolve the problem that feedback information cannot be delivered to a network device because feedback information is discarded due to collisions with DL symbols or transmission of feedback information is canceled due to overlap with high-priority channels/signals.

According to a first aspect, a feedback information transmission method is provided and performed by a terminal. The method includes: receiving feedback indication information, where the feedback indication information is used to indicate whether the terminal is to transmit target feedback information, the target feedback information is feedback information that is reported by the terminal within a target time window, or the target feedback information is feedback information corresponding to a first downlink transmission that is received by the terminal within the target time window; and in a case that the feedback indication information indicates the terminal to transmit the target feedback information, transmitting the target feedback information.

According to a second aspect, a feedback information transmission method is provided and performed by a network device. The method includes: sending feedback indication information, where the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window.

According to a third aspect, a feedback information transmission apparatus is provided. The apparatus includes: a receiving module, configured to receive feedback indication information, where the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window; and a transmitting module, configured to: in a case that the feedback indication information indicates the terminal to transmit the target feedback information, transmit the target feedback information.

According to a fourth aspect, a feedback information transmission apparatus is provided. The apparatus includes: a sending module, configured to send feedback indication information, where the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window; and a transceiver.

According to a fifth aspect, a terminal is provided, where the terminal includes a processor, a memory, and a program or instructions stored in the memory and executable on the processor, and when the program or instructions are executed by the processor, steps of the method according to the first aspect are implemented.

According to a sixth aspect, a network device is provided, where the network device includes a processor, a memory, and a program or instructions stored in the memory and executable on the processor, and when the program or instructions are executed by the processor, steps of the method according to the second aspect are implemented.

According to a seventh aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eighth aspect, a chip is provided, where the chip includes a processor and a communication interface, the communication interface is coupled to the processor, and the processor is configured to run a program or instructions of a network device to implement the steps of the method according to the first aspect, or implement the steps of the method according to the second aspect.

According to a ninth aspect, a computer program product is provided, where the computer program product includes a processor, a memory, and a program or instructions stored in the memory and executable on the processor, and when the program or instructions are executed by the processor, steps of the method according to the first aspect are implemented, or steps of the method according to the second aspect are implemented.

In the embodiments of this application, a terminal receives the feedback indication information and transmits target feedback information in a case that the feedback indication information indicates the terminal to transmit the target feedback information, where the target feedback information is the feedback information that is reported by the terminal within a target time window, or the target feedback information is the feedback information corresponding to a first downlink transmission that is received by the terminal within the target time window. In this way, in the embodiments, the terminal can be triggered by the feedback indication information to transmit the target feedback information, effectively increasing feedback occasions for the terminal to report target feedback information, thereby guaranteeing effective reporting of the target feedback information.

### BRIEF DESCRIPTION OF DRAWINGS

FIG. 1 is a block diagram of a wireless communication system according to an example embodiment of this application;
FIG. 2 is a schematic flowchart of a feedback information transmission method performed by a terminal according to an example embodiment of this application;
FIG. 3 is a schematic flowchart of a feedback information transmission method performed by a terminal according to an example embodiment of this application;
FIG. 4 is a schematic diagram of feedback information transmission according to an example embodiment of this application;
FIG. 5a, FIG. 5b, and FIG. 5c are schematic diagrams of feedback information transmission according to another example embodiment of this application;
FIG. 6 is a schematic flowchart of a feedback information transmission method performed by a terminal according to still another example embodiment of this application;
FIG. 7a and FIG. 7b are schematic diagrams of feedback information transmission according to still another example embodiment of this application;
FIG. 8 is a schematic flowchart of a feedback information transmission method performed by a network device according to an example embodiment of this application;
FIG. 9 is a block diagram of a feedback information transmission apparatus according to an example embodiment of this application;
FIG. 10 is a block diagram of a feedback information transmission apparatus according to another example embodiment of this application;
FIG. 11 is a block diagram of a communication device according to an example embodiment of this application;
FIG. 12 is a block diagram of a terminal according to an example embodiment of this application; and
FIG. 13 is a block diagram of a network device according to an example embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all embodiments of this application. All other embodiments obtained by persons of ordinary skill in the art based on the embodiments of this application without creative efforts shall fall within the protection scope of this application.

In the specification and claims of this application, the terms "first", "second", and the like are intended to distinguish between similar objects rather than to describe a specific order or sequence. It should be understood that the terms used in this way are interchangeable in appropriate circumstances so that the embodiments of this application can be implemented in other orders than the order illustrated or described herein. In addition, objects distinguished by "first" and "second" usually fall within one class, and a quantity of objects is not limited. For example, there may be one or more first objects. In addition, in the specification and claims, "and/or" indicates at least one of connected objects, and the symbol "/" generally indicates that the associated objects have an "or" relationship.

It should be noted that technologies described in the embodiments of this application are not limited to the long term evolution (Long Term Evolution, LTE) or LTE-Advanced (LTE-Advanced, LTE-A) system, but may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. The technologies described herein may be used in the above-mentioned systems and radio technologies as well as other systems and radio technologies. However, in the following descriptions, the new radio (New Radio, NR) system is described for an illustration purpose, and NR terms are used in most of the following descriptions. These technologies may also have other applications than the application in NR system, for example, being used in the 6th (6th Generation, 6G) communication system.

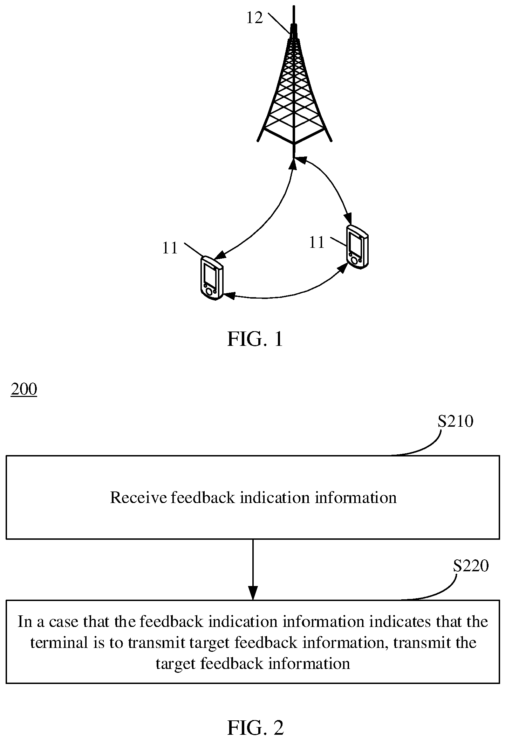

FIG. 1 is a block diagram of a wireless communication system to which the embodiments of this application are applicable. The wireless communication system includes a terminal 11 and a network device 12. The terminal 11 may also be referred to as a terminal device or a user terminal, and the terminal 11 may be a terminal-side device such as a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes wrist bands, earphones, glasses, and the like. It should be noted that the specific type of the terminal 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission-reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, but the specific type of the base station is not limited.

The following describes in detail the technical solutions provided in the embodiments of this application by using specific embodiments and application scenarios thereof with reference to the accompanying drawings.

FIG. 2 is a schematic flowchart of a feedback information transmission method 200 according to an example embodiment of this application. The method 200 may be applied without limitation to a terminal, and specifically may be performed by software and/or hardware installed on the terminal. The method 200 may include at least the following steps.

S210. Receive feedback indication information.

The feedback indication information is used to indicate whether the terminal is to transmit target feedback information.

In a possible implementation, the feedback indication information may be issued by a network device and transmitted to the terminal via target downlink control information (Downlink Control Information, DCI) so as to indicate whether the terminal is to transmit the target feedback information. In this case, the target DCI may be DCI for scheduling data, or may be DCI for purposes other than scheduling data. For example, the DCI for scheduling data may include at least one of DCI for scheduling uplink/downlink data, DCI for activating a configured grant (Configured Grant, CG) PUSCH, and DCI for activating an SPS PDSCH. The DCI for purposes other than scheduling data may include at least one of group common (group common, GC) DCI, DCI for triggering aperiodic-channel state information (Aperiodic-Channel State Information, A-CSI), DCI for activating semi-persistent (Semi-persistent, SP) CSI, DCI for triggering sounding reference signal (Sounding Reference Signal, SRS), and the like.

In another possible implementation, in an SPS PDSCH scenario, the feedback indication information may alternatively be configured by higher-layer signaling and/or be indicated in the DCI for activating SPS PDSCH, where the higher-layer signaling may include radio resource control (Radio Resource Control, RRC) signaling, and the like. In an implementation, corresponding feedback indication information may be configured for each SPS PDSCH using higher-layer signaling such as the RRC signaling.

The target feedback information may be feedback information that has failed to be received by the network device due to reasons such as poor channel conditions and time domain resource collisions. For example, in this embodiment, the target feedback information may be feedback information that is reported by the terminal within a target time window, for example, HARQ-ACKs configured or scheduled to be reported within the target time window (including HARQ-ACKs not yet transmitted by the terminal for some reason). For another example, the target feedback information may alternatively be feedback information corresponding to a first downlink transmission that is received by the terminal within the target time window, for example, feedback information corresponding to a downlink transmission that is configured or scheduled to be transmitted within the target time window.

In an implementation, the foregoing target time window may be an uplink time window or a downlink time window. In the case that the target time window is an uplink time window, the target feedback information may be feedback information that is reported by the terminal within the target time window. In the case that the target time window is a downlink time window, the target feedback information may be feedback information corresponding to a target downlink transmission that is received by the terminal within the target time window. This is not limited in this embodiment.

S220. In a case that the feedback indication information indicates the terminal to transmit the target feedback information, transmit the target feedback information.

The time for the terminal to transmit the target feedback information may be determined by pre-definition, or may be configured by a network device or be indicated (for example, being indicated by RRC or DCI). This is not limited in this embodiment.

In addition, in an implementation, in a case that the feedback indication information indicates the terminal not to transmit the target feedback information, the terminal does not transmit the target feedback information.

In the feedback information transmission method 200 provided in this embodiment, the terminal receives feedback indication information and transmits the target feedback information in the case that the feedback indication information indicates the terminal to transmit the target feedback information. In this way, for one, in this embodiment, the terminal can be triggered by the feedback indication information to transmit the target feedback information, effectively increasing feedback occasions for the terminal to report the target feedback information, thereby guaranteeing effective reporting of the target feedback information. For another, this embodiment further effectively resolves the problem that feedback information cannot be delivered to a network device because feedback information is discarded due to collisions with DL symbols or transmission of feedback information is canceled due to overlap with high-priority channels/signals, guaranteeing communication performance.

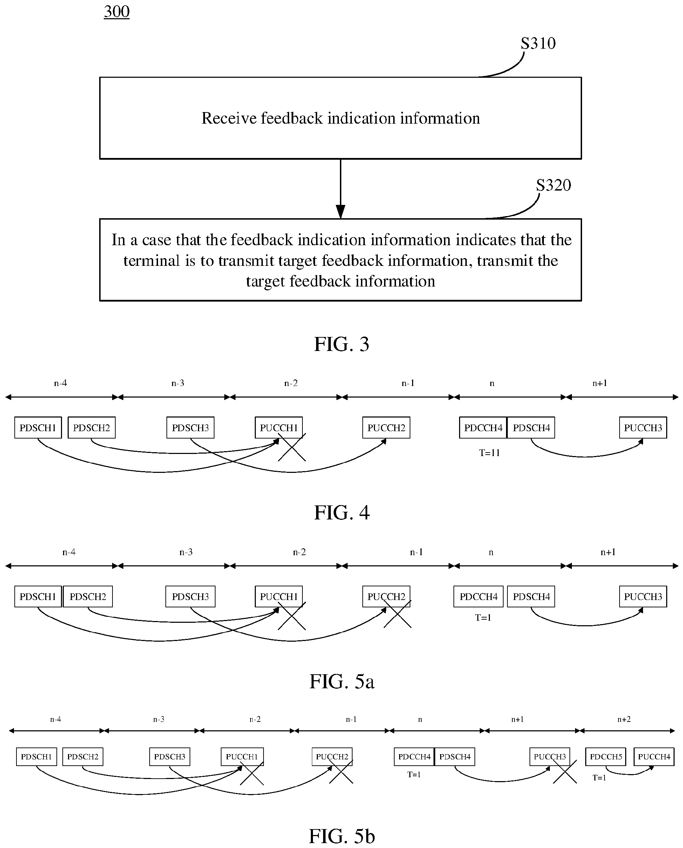

FIG. 3 is a schematic flowchart of a feedback information transmission method 300 according to an example embodiment of this application. The method 300 may be applied without limitation to a terminal, and specifically may be performed by software and/or hardware installed on the terminal. The method 300 may include at least the following steps.

S310. Receive feedback indication information.

The feedback indication information is used to indicate whether the terminal is to transmit target feedback information, where the target feedback information is feedback information that is reported by the terminal within a target time window, or the target feedback information is feedback information corresponding to a first downlink transmission that is received by the terminal within the target time window.

For a specific implementation of S310, reference may be made to the detailed description of the foregoing S210. In addition, in this embodiment, the first downlink transmission may include at least one of the following (1) to (4).
(1) PDSCH or PDCCH that is scheduled to be transmitted within the target time window, where the PDSCH may be scheduled by DCI.
(2) PDCCH that is transmitted within the target time window.
(3) PDSCH that is preconfigured to be transmitted within the target time window.
   The pre-configuration of PDSCH transmission may be implemented by a network device or via higher-layer signaling, for example, SPS PDSCH being configured by higher-layer signaling and activated by DCI, or the pre-configuration of PDSCH transmission may be implemented by the terminal, in which case a configuration result is synchronized to the network device. This embodiment imposes no limitation in this sense.
(4) PDSCH that corresponds to a candidate PDSCH reception occasion within the target time window.

The candidate PDSCH reception occasion, or potential PDSCH reception occasion, may be determined by the terminal based on at least one of a PDCCH monitoring occasion, time domain resource allocation (Time Domain Resource Allocation, TDRA) information of PDSCH, a K1 (which is timing from PDSCH to HARQ-ACK) set, semi-persistent uplink configuration, and dynamic slot format indication (Slot Format Indication, SFI).

For the foregoing K1 set, it can be understood that a HARQ-ACK timing set may be configured or defined for each terminal via RRC configuration, where the set includes one or more HARQ-ACK timing values known as K1 values, and the K1 may be measured in slots or sub-slots. In this way, when dynamically scheduling a downlink transmission, a base station indicates a K1 value in DCI in the form of an index, where the K1 is one value selected from the HARQ-ACK timing set and is used for notifying the terminal of a HARQ-ACK occasion.

The target time window may be determined in at least one of the following manners (1) to (4):
(1) Being configured by a higher layer. For example, the target time window is indicated by RRC. In an implementation, RRC may indicate an absolute time length of the target time window or indicate the quantity, indexes, start time, end time, and the like of time units included in the target time window.
(2) Being configured by pre-definition. In an implementation, the being configured by pre-definition may be being prescribed by a protocol.
(3) Being implicitly obtained. In an implementation, the target time window may be associated with a service. For example, length of the target time window is related to a latency requirement of the associated service.
(4) Being indicated by target DCI. The being indicated by target DCI is similar to the being indicated by RRC, where the target DCI may indicate an absolute time length of the target time window or indicate the quantity, indexes, start time, end time, and the like of time units included in the target time window.

It can be understood that in the foregoing several implementations, the target time window may be determined based on only any one of (1) to (4), or the target time window may be determined based on two or more of (1) to (4) together. For example, one or more target time windows may be configured by higher-layer signaling, and one of the one or more target time windows may be indicated as the target time window by DCI. Details are not further described in this embodiment.

In the foregoing case, the target time window may be an absolute time (for example, 4 ms or 10 ms) or may include at least one time unit. The time unit may be slot (slot), sub-slot, symbol (symbol, such as OFDM symbol) set, symbol, or the like.

In this embodiment, the time unit may be an uplink time unit or a downlink time unit. Optionally, in a case that the target time window includes at least one uplink time unit, the uplink time unit may be at least one of the following (1) to (4).
(1) Time unit that is configured as an uplink time unit by higher-layer signaling.
   The base station can semi-persistently configure a slot format by using a higher-layer parameter tdd-UL-DL-ConfigurationCommon and/or tdd-UL-DL-Configuration Dedicated.
(2) Time unit that is indicated as an uplink time unit by dynamic (dynamic) SFI.

SFI may be sent via GC-PDCCH to indicate a format of one or more slots. For example, the base station can rewrite a semi-persistently configured flexible (flexible) symbol or slot by using SFI carried in the GC-PDCCH, so as to flexibly change a format of the symbol or slot as appropriate to actual requirements, thereby satisfying different service transmission requirements.

It can be understood that the foregoing flexible symbol or slot means that a transmission direction of the symbol or slot is undetermined. The network can modify the transmission direction of the flexible symbol or slot by using dynamic signaling such as dynamic SFI.

(3) Time unit that includes an uplink symbol and/or a flexible (flexible) symbol and that is configured by higher-layer signaling.

(4) Time unit that includes an uplink symbol and/or a flexible symbol and that is indicated by the dynamic SFI.

Correspondingly, in a case that the target time window includes at least one downlink time unit, the downlink time unit may alternatively be at least one of the following (1) to (4).
(1) Time unit that is configured as a downlink time unit by higher-layer signaling.
(2) Time unit that is indicated as a downlink time unit by the dynamic SFI.
(3) Time unit that includes a downlink symbol and/or a flexible symbol and that is configured by higher-layer signaling.
(4) Time unit that includes a downlink symbol and/or a flexible symbol and that is indicated by the dynamic SFI.

Similar to the uplink time unit, the downlink time unit described in the foregoing (1) to (4) can be implemented according to the foregoing description of the uplink time unit. To avoid repetition, details are not described again in this embodiment.

Further, considering the difference of target time windows, the following describes the target feedback information corresponding to different target time windows with reference to example 1 to example 3. Details are as follows.

In example 1, in a case that the target time window is an absolute time, the target feedback information may be any one of the following (1) and (2).
(1) Feedback information that is reported within a first duration before a designated time.
   The first duration may be determined based on the absolute time. For example, when the absolute time is 4 ms, the first duration determined based on the absolute time is 4 ms. In addition, the designated time may include any one of the following (a) to (j).
   (a) Start time or end time of target DCI. In an implementation, the target DCI may be DCI that is used for transmitting the feedback indication information, or may be DCI that is used for determining the target time window, which is not limited herein.
   (b) Start time or end time of a time unit in which the target DCI is located.
   (c) Start time or end time of a first uplink transmission scheduled by the target DCI. The first uplink transmission may include a PUCCH or a PUSCH.
   (d) Start time or end time of a time unit in which the first uplink transmission scheduled by the target DCI is located.
   (e) Start time or end time of a downlink transmission scheduled by the target DCI.
   (f) Start time or end time of a time unit in which the downlink transmission scheduled by the target DCI is located.
   (g) Start time or end time of a second uplink transmission. The second uplink transmission may be a PUCCH that is used for reporting an SPS PDSCH HARQ-ACK in an SPS PDSCH scenario.
   (h) Start time or end time of a time unit in which the second uplink transmission is located.
   (i) Start time or end time of a second downlink transmission, where the second downlink transmission may include an SPS PDSCH in the SPS PDSCH scenario.
   (j) Start time or end time of a time unit in which the second downlink transmission is located.
(2) Feedback information corresponding to the first downlink transmission that is received within the first duration before the designated time. For the target feedback information described in (2), reference may be made to the detailed description of the foregoing (1). To avoid repetition, details are not described herein again.

In example 2, in a case that the target time window includes at least one time unit, the target feedback information is any one of the following (1) and (2).
(1) Feedback information that is reported within a first quantity of time units before a designated time unit.
   The first quantity may be determined based on a quantity of time units included in the target time window. For example, when the target time window includes 5 time units, the first quantity is 5. In an implementation, the designated time unit includes any one of the following (a) to (d).
   (a) Time unit to which a target symbol corresponding to target DCI belongs. The target symbol is a start symbol or an end symbol.
   (b) Time unit corresponding to a first uplink transmission scheduled by the target DCI. The first uplink transmission may include a PUCCH or a PUSCH.
   (c) Start time or end time of a first downlink transmission scheduled by the target DCI.
   (d) Time unit to which the target DCI belongs.
(2) Feedback information corresponding to the first downlink transmission that is received within the first quantity of time units before the designated time unit. For the target feedback information described in (2), reference may be made to the detailed description of the foregoing (1). To avoid repetition, details are not described herein again.

In example 3, in a case that the target time window is determined based on a quantity of time units that is configured or indicated, the target time window may be time units from a time unit having a backward shift of a quantity of time units with respect to an uplink time unit corresponding to current DCI (that is, target DCI) or with respect to a time unit corresponding to a scheduled PUCCH/PUSCH to the uplink time unit corresponding to the current DCI (the uplink time unit corresponding to the current DCI may be excluded), or may be a time unit shift list that is configured by a higher layer (for example, being configured by RRC), where each item of the time unit shift list includes one or more quantities of time units, and one or more items of the time unit shift list configured by the higher layer are indicated by DCI.

For example, assuming that the target feedback information is HARQ-ACK, referring to FIG. 4, a time unit shift list configured by the base station (that is, the network device) via RRC may include three items: {0}, {1, 2}, and {3, 4}. Target DCI includes 2 bits, for example, 00, 01, 10, or 11, to respectively indicate that HARQ-ACK feedback within the indicated time window is not triggered and that the terminal is triggered to report HARQ-ACKs that are {0}, {1, 2}, and {3, 4} slots backward from the target DCI.

In an implementation, as shown in FIG. 4, assuming that PUCCH1 is not successfully transmitted for some reason, then the base station can have the target DCI carried on PDCCH4 in slot n to trigger the terminal to report feedback. PDCCH4 includes a related indication field, for example, trigger field, which indicates "11" (that is, T = 11 as shown in FIG. 4). It can be learned from the foregoing content that "11" corresponds to {3, 4} in the time unit shift list, meaning that the terminal is triggered to report HARQ-ACKs that are {3, 4} time units before a reference time. For example, with a time unit in which the target DCI is located used as a reference time, this means triggering feedback of HARQ-ACKs that are {3, 4} slots (that are slot n-4 and slot n-3) backward from a slot where PDCCH4 is located, that is, HARQ-ACK reported by PUCCH1. It can be learned that the terminal can report HARQ-ACK (that is, target feedback information) corresponding to PUCCH1 and HARQ-ACK corresponding to PDSCH4 in slot n+1.

In addition, it should be noted that RRC or DCI is used for configuring/indicating a start time/time unit and/or time length of a target time window, or an end time/time unit of a time window. For example, a time window being {1, 4} as configured by RRC may mean triggering HARQ-ACKs that are reported in the time range from time unit n-4 to time unit n-1 before the reference time, for example, uplink time unit n corresponding to a start/end symbol of the target DCI, that is, HARQ-ACKs reported within the time range from slot n-4 to slot n-1 as shown in FIG. 4, or, HARQ-ACKs reported on PUCCH1 and PUCCH2.

For another example, if a time window configured by RRC is {S, L} and the trigger reference time, for example, the time unit in which the target DCI is located, is n, then the target feedback information is HARQ-ACKs reported in the time range from time unit n-L+1 to time unit n-S. It should be noted that the configuration manner of the target time window in this application may be but is not limited to the foregoing configuration manner.

Further, as a possible implementation of this application, the target feedback information is feedback information having an indication identifier, where the indication identifier is indicated in the target DCI, or the indication identifier is the same as an identifier corresponding to a HARQ-ACK for a PDSCH scheduled by the target DCI or a HARQ-ACK corresponding to the DCI. The indication identifier includes a codebook index and/or priority information. For example, the target feedback information that is transmitted by the terminal may be a HARQ-ACK corresponding to a specified codebook index/priority.

In addition, in a case that the target feedback information is feedback information corresponding to a first downlink transmission that is scheduled within a second duration (for example, T) before a first uplink transmission is triggered, the first downlink transmission is a downlink transmission that satisfies a preset processing time.

For example, in a case that the first downlink transmission is a scheduled PDSCH, the terminal is triggered by feedback indication information to transmit feedback information corresponding to a PDSCH that is scheduled in the time range from time unit n-X to time unit n-1 and that satisfies a PDSCH processing time. The PDSCH processing time may be determined according to a predefined rule, which is not described herein.

S320. In a case that the feedback indication information indicates the terminal to transmit the target feedback information, transmit the target feedback information.

For a specific implementation of S320, reference may be made to the description of the foregoing S220. In addition, as a possible implementation, a process of the terminal transmitting the target feedback information may include: in a case that a target PDSCH has been scheduled by the target DCI, transmitting the target feedback information and feedback information corresponding to the target PDSCH on a same time domain resource; or in a case that the target DCI needs to report a HARQ-ACK (for example, the target DCI is DCI for releasing an SPS PDSCH, or the target DCI is DCI for indicating that a secondary cell (Scell) enters a sleep state), transmitting the target feedback information and feedback information corresponding to the target DCI on a same time domain resource.

As another possible implementation, in a case that there are multiple pieces of same first feedback information that are reported in the target feedback information, at least one piece of the first feedback information and other feedback information except the multiple pieces of first feedback information included in the target feedback information are transmitted. The at least one piece of the first feedback information may be determined by pre-definition, for example, the first piece of first feedback information or the last piece of first feedback information in the multiple pieces of first feedback information.

For example, assuming that the target feedback information is ABA, because the ABA includes two A-s that are reported, to avoid resource waste and improve transmission efficiency, only B and one A, that is, AB or BA may be reported.

It should be noted that in the foregoing feedback information transmission method 300, in a case that there are multiple pieces of target feedback information, before transmitting the target feedback information, the terminal can perform at least one of the following (1) to (4).
(1) Sorting the target feedback information according to a feedback time order of the target feedback information (from early to late or from late to early).
(2) Sorting the target feedback information by a target cell index, where the target cell index is an index of a serving cell to which a downlink transmission corresponding to the target feedback information belongs.
(3) Sorting the target feedback information according to a transmission time order of the downlink transmissions corresponding to the target feedback information.
(4) Concatenating the target feedback information. The order of concatenation of the target feedback information is not limited.

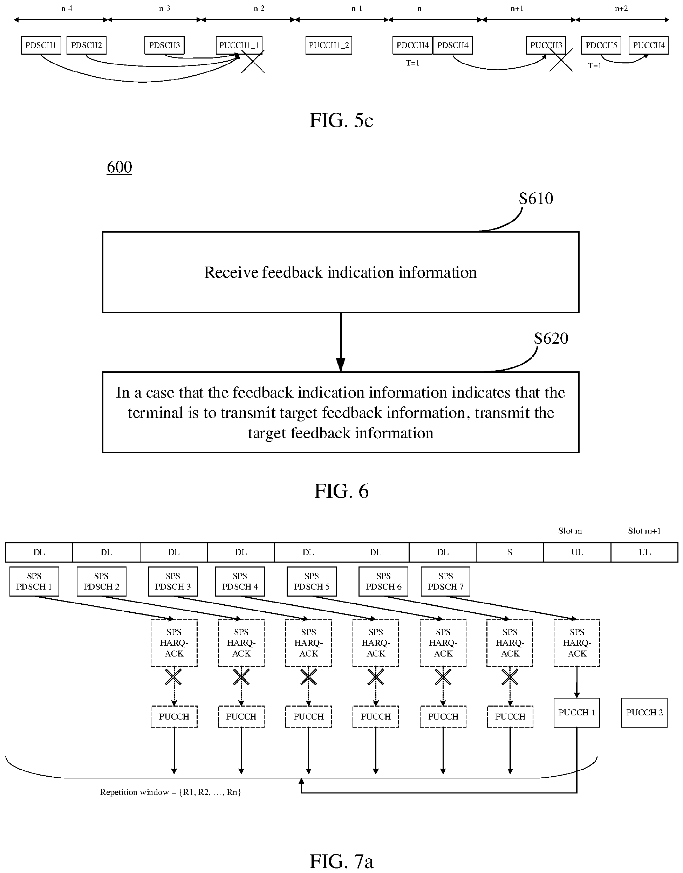

Based on the feedback information transmission method 300 in this embodiment, the following describes implementation processes of the feedback information transmission method 300 with reference to FIG. 5a, FIG. 5b, and FIG. 5c.

As shown in FIG. 5a, assuming that PDSCH1 and PDSCH2 are dynamically scheduled downlink transmission PDSCHs, based on indication of scheduling DCI corresponding to PDSCH1 and PDSCH2, HARQ-ACKs (feedback information) that respectively correspond to PDSCH1 and PDSCH2 are reported on PUCCH1 in slot n-2. If PDSCH3 is an SPS PDSCH, based on indication of trigger DCI of PDSCH3, a HARQ-ACK corresponding to PDSCH3 is reported on PUCCH2 in slot n-1. However, a PUSCH having a higher priority than PUCCH1 is transmitted in slot n-2, so that transmission for PUCCH1 is canceled. In addition, in slot n-1, because being configured by semi-persistent uplink/downlink TDD or indicated by SFI, some or all symbols of PUCCH2 collide with downlink symbols configured by semi-persistent uplink/downlink TDD or downlink or flexible symbols indicated by SFI, and as a result, transmission of PUCCH2 is canceled or PUCCH2 is unable to be transmitted. Therefore, HARQ-ACKs that respectively correspond to PDSCH1, PDSCH2, and PDSCH3 cannot be delivered to the base station (that is, the network device).

For this reason, in this embodiment, to ensure effective transmission of PUCCH1 and PUCCH2, the base station can configure a target time window by using higher-layer signaling, for example, indicating a quantity of time units (such as slots) or an absolute time length (for example, 4 slots are configured for the target time window using RRC). PDCCH4 schedules PDSCH4, indicates that a HARQ-ACK corresponding to PDSCH4 is reported in slot n, and triggers the terminal to transmit HARQ-ACK that is within the target time window, where the triggering may be explicit triggering by 1 bit included in DCI, or implicit triggering in other manners. In this way, after receiving PDCCH4 carrying triggering information, the terminal transmits HARQ-ACK that is within the target time window, which means that in slot n+1, the terminal needs to transmit not only the HARQ-ACK for PDSCH4 but also the HARQ-ACK (that is, the target feedback information) that is within the target time window. For example, assuming that the first quantity is 4, the target feedback information may include at least one of the following.
(1) HARQ-ACKs that are reported within the first quantity (for example, 4) of time units before a time unit in which target DCI is located. These are HARQ-ACKs that are reported in the time range from slot n-4 to slot n-1 (the target time window) as shown in FIG. 5a, for example, HARQ-ACKs reported on PUCCH1 and PUCCH2.
(2) HARQ-ACKs corresponding to downlink transmissions that are scheduled within the first quantity of time units before the time unit in which the target DCI is located. These are HARQ-ACKs corresponding to PDSCHs that are scheduled in the time range from slot n-4 to slot n-1 (the target time window) as shown in FIG. 5a, for example, HARQ-ACKs corresponding to PDSCH1, PDSCH2, and PDSCH3.
(3) HARQ-ACKs that are reported within the first quantity of time units before a time unit corresponding to a first uplink transmission scheduled by the target DCI. These are HARQ-ACKs reported in the time range from slot n-3 to slot n as shown in FIG. 5a, for example, HARQ-ACKs reported on PUCCH1 and PUCCH2.
(4) HARQ-ACKs corresponding to downlink transmissions that are scheduled within the first quantity of time units before the time unit corresponding to the first uplink transmission scheduled by the target DCI. These are HARQ-ACKs corresponding to PDSCHs that are scheduled from slot n-3 to slot n as shown in FIG. 5a, for example, the HARQ-ACK corresponding PDSCH3.
(5) HARQ-ACKs that are reported within the first quantity of time units before a time unit to which a target symbol (for example, end symbol or start symbol) corresponding to the target DCI belongs. Refer to FIG. 5a. Assuming that the time unit to which the end symbol or start symbol corresponding to the target DCI belongs is n, then based on this, the terminal transmits the HARQ-ACKs that are reported in the time range from slot n-4 to slot n-1, for example, the HARQ-ACKs reported on PUCCH 1 and PUCCH2.
(6) HARQ-ACKs corresponding to the first downlink transmissions that are received within the first quantity of time units before the time unit to which the target symbol corresponding to the target DCI belongs. Refer to FIG. 5a. Assuming that the time unit to which the end symbol or the start symbol corresponding to the target DCI belongs is n, then based on this, the terminal transmits the HARQ-ACKs corresponding to PDSCHs that are scheduled in the time range from slot n-4 to slot n-1, for example, the HARQ-ACKs corresponding to PDSCH1, PDSCH2, and PDSCH3.
(7) HARQ-ACK corresponding to the first downlink transmissions that are received within the first quantity of time units before the time unit corresponding to the first uplink transmission scheduled by the target DCI. These are the HARQ-ACKs corresponding to the PDSCHs that are scheduled in the time range from slot n-3 to slot n as shown in FIG. 5a, for example, the HARQ-ACKs corresponding to PDSCH3 and PDSCH4.
(8) HARQ-ACKs that are reported within the first quantity of time units before a start time or an end time of the first downlink transmission scheduled by the target DCI. Refer to FIG. 5a. Assuming that the first quantity of time units before the start time or end time of the first downlink transmission scheduled by the target DCI are from slot n-4 to slot n-1, the target feedback information is the HARQ-ACKs that are reported on PUCCH1 and PUCCH2.
(9) HARQ-ACKs corresponding to the first downlink transmissions that are received within the first quantity of time units before the start time or end time of the first downlink transmission scheduled by the target DCI. Refer to FIG. 5a. Assuming that the first quantity of time units before the start time or end time of the first downlink transmission scheduled by the target DCI are from slot n-4 to slot n-1, the target feedback information is the HARQ-ACKs corresponding to PDSCH1, PDSCH2, and PDSCH3.

It should be noted that multiple HARQ-ACKs (that is, target feedback information) may be present in transmissions by the terminal, so the HARQ-ACKs that respectively correspond to PDSCH1, PDSCH2, and PDSCH3 may be arranged in a time order or a serving cell index order or a PDSCH reception time order, or a HARQ-ACK codebook of PUCCH1 and a HARQ-ACK codebook of PUCCH2 may further be concatenated such that HARQ-ACK information of PDSCH4 is placed at the beginning/end of the concatenated codebook, and finally feedback information is transmitted based on the multiple HARQ-ACKs that have been sorted or concatenated.

In a case that the terminal is configured to generate two HARQ-ACK codebooks, the target DCI can indicate that a HARQ-ACK corresponding to a codebook within the target time window is to be triggered. For example, 1 bit in the DCI indicates a codebook of the triggered HARQ-ACK. Alternatively, indication is performed in other implicit manners, for example, a DCI format. As shown in FIG. 5a, assuming that the HARQ-ACK corresponding to PDSCH1 and PDSCH2 is codebook 1, a HARQ-ACK codebook corresponding to PDSCH3 is codebook 0 (for example, codebook 1 corresponds to a high priority and codebook 0 corresponds to a low priority, PUCCH1 has a high priority and PUCCH2 has a low priority), and the HARQ-ACK corresponding to PDSCH4 that is scheduled by PDCCH4 is codebook 1, when the terminal is triggered by PDCCH4 to transmit HARQ-ACK that is within the target time window, PDCCH4 may indicate that the terminal is triggered to transmit HARQ-ACK that is corresponding to codebook 1 and within the target time window, or PDCCH4 indicates that HARQ-ACK of which codebook(s) is to be triggered or indicates a HARQ-ACK codebook triggered by pre-definition or higher-layer configuration.

In another implementation, if the HARQ-ACK information determined according to the foregoing (1) to (4) is repeated (a HARQ-ACK for a given PDSCH is included for multiple times), the terminal may transmit the HARQ-ACK information only once. For example, referring to FIG. 5b, the base station triggers, using PDCCH4, the terminal to transmit HARQ-ACK reported within the target time window, but transmission of PUCCH3 has failed for some unexpected reason (for example, high-priority uplink transmission, or cancellation by the terminal, or channel access failure). Therefore, the base station triggers in slot n+2 the terminal to transmit again HARQ-ACK information that is within the target time window, that is, HARQ-ACKs that are transmitted in the time range from slot n-2 to slot n+1 (the target time window) shown in FIG. 5b, for example, the HARQ-ACKs that are reported on PUCCH1, PUCCH2, and PUCCH3, where HARQ-ACK information carried in PUCCH1, PUCCH2, and PUCCH3 can be concatenated.

However, as the terminal has been triggered by PDCCH4 to transmit the HARQ-ACK that is within the target time window, that is, PUCCH3 has included the HARQ-ACKs on PUCCH1 and PUCCH2, if the HARQ-ACKs corresponding to PUCCH1, PUCCH2, and PUCCH3 are directly concatenated by the terminal in slot n+2, the HARQ-ACK information corresponding to PDSCH1, PDSCH2, and PDSCH3 would be included twice. For this reason, the terminal does not need to transmit the HARQ-ACKs carried in PUCCH1 and PUCCH2 but only needs to report again in slot n+2 the HARQ-ACK reported by PUCCH3.

In addition, if a target feedback window includes multiple repetitions of a PUCCH, a HARQ-ACK carried in the PUCCH only needs to be reported once in a time unit indicated by the trigger DCI. As shown in FIG. 5c, PDSCHs 1 to 3 each indicate that HARQ-ACK is to be reported in slot n-2, and repetition is configured for a corresponding PUCCH 1_1, that is, PUCCH 1_1 and PUCCH 1_2 are different repetitions of the same PUCCH. The base station can trigger, by using PDCCH4, HARQ-ACKs that are reported within the time window of n-2 and n-1, such that the terminal only needs to transmit the HARQ-ACK corresponding to PUCCH 1_1 or PUCCH 1_2. In this case, 3-bit HARQ-ACKs corresponding to PDSCHs 1 to 3 and 1-bit HARQ-ACK corresponding to PDSCH4 are transmitted in slot n+2, without the need to concatenate HARQ-ACK bits corresponding to PUCCH 1_1 and PUCCH 1_2.

FIG. 6 is a schematic flowchart of a feedback information transmission method 600 according to an example embodiment of this application. The method 600 may be applied without limitation to a terminal, and specifically may be performed by software and/or hardware installed on the terminal. The method 600 may include at least the following steps.

S610. Receive feedback indication information.

The feedback indication information is used to indicate whether the terminal is to transmit target feedback information, the target feedback information is feedback information that is reported by the terminal within a target time window, or the target feedback information is feedback information corresponding to a first downlink transmission that is received by the terminal within the target time window.

S620. In a case that the feedback indication information indicates the terminal to transmit the target feedback information, transmit the target feedback information.

For implementation processes of S610 and S620, reference may be made to the foregoing detailed descriptions of the foregoing feedback information transmission methods 200 and 300. In addition, in this embodiment, the target feedback information includes HARQ-ACK information corresponding to an SPS PDSCH. It can be understood that for SPS PDSCH, a network device (for example, base station) can configure a target time window, for example, a HARQ-ACK feedback window, for each SPS PDSCH. Within the HARQ-ACK feedback window corresponding to SPS PDSCH, the terminal can report within the HARQ-ACK feedback window HARQ-ACK corresponding to SPS PDSCH, and/or HARQ-ACK indicated or configured to be transmitted in the HARQ-ACK feedback window.

In an implementation, similar to the foregoing target time window, the HARQ-ACK feedback window may also be a quantity of time units or an absolute time. In addition, the HARQ-ACK feedback window is a second quantity of time units before a time unit in which a target PUCCH is located; or the HARQ-ACK feedback window is a third duration before a target time; where the target PUCCH is a PUCCH that is used for reporting HARQ-ACK corresponding to SPS PDSCH; and the target time includes any one of a start time of the target PUCCH, an end time of the target PUCCH, a start time of the time unit in which the target PUCCH is located, and an end time of the time unit in which the target PUCCH is located.

For example, for SPS PDSCH, the network configures or indicates a HARQ-ACK feedback window or HARQ-ACK transmission candidate window corresponding to SPS HARQ-ACK feedback (PUCCH reporting only HARQ-ACK for SPS PDSCH).

For a PUCCH having a given time domain position for carrying SPS HARQ-ACK, a HARQ-ACK included in the PUCCH is determined by a corresponding HARQ-ACK transmission within the HARQ-ACK transmission candidate window.

Optionally, for the HARQ-ACK transmission candidate window, if a HARQ-ACK or a PUCCH for carrying HARQ-ACK has not been transmitted, the HARQ-ACK or the HARQ-ACK carried in the PUCCH is contained in the PUCCH.

In addition, optionally, if a HARQ-ACK or a PUCCH carrying HARQ-ACK has been transmitted, the terminal does not generate or include in the PUCCH the HARQ-ACK; or the terminal includes the HARQ-ACK in the PUCCH. This is not limited in this embodiment.

It can be understood that the foregoing HARQ-ACK transmission candidate window may be indicated or updated by DCI. The DCI is trigger DCI corresponding to SPS PDSCH, where a radio network temporary identifier (Radio Network Temporary Identifier, RNTI) of the trigger DCI is CS-RNTI, the DCI can schedule or not schedule PDSCH, and a resource for the PUCCH is a PUCCH resource that is indicated by the trigger DCI.

For example, as shown in FIG. 7a, it is assumed that a periodicity of SPS PDSCH is one slot, that a time division multiplexing (TDD) uplink/downlink configuration is DDDDDDDSUU, and that k1 = 2 is indicated in the trigger DCI (that is, the foregoing target DCI). Then, if the terminal receives SPS PDSCH in slot n, the terminal reports in slot n+2 HARQ-ACK for the SPS PDSCH. However, due to the TDD uplink/downlink configuration, it is possible that none of HARQ-ACKs that respectively correspond to SPS PDSCHs 1 to 6 shown in FIG. 7a are able to be delivered to the base station.

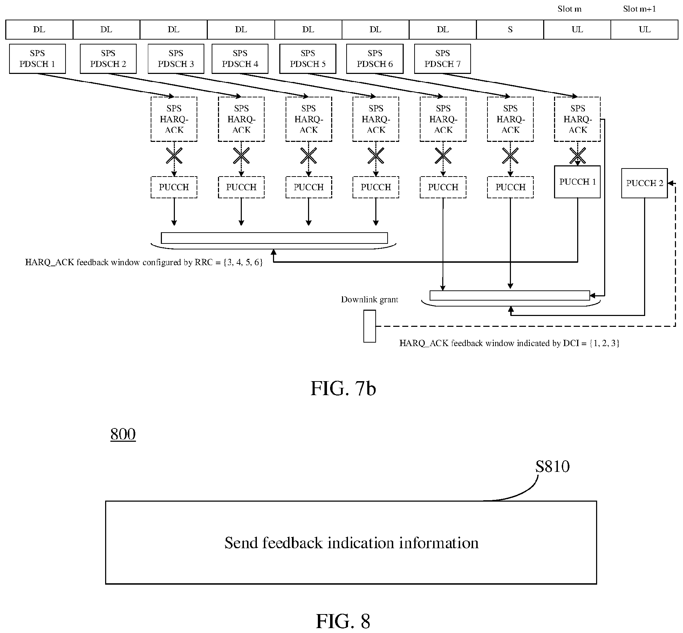

For this reason, in this embodiment, a HARQ-ACK feedback window (that is, a target time window) can be configured for the SPS PDSCH or indicated in the trigger DCI by the base station. When reporting HARQ-ACK for one SPS PDSCH at each time, the terminal not only reports the HARQ-ACK for the SPS PDSCH but also can transmit HARQ-ACKs reported within the target time window. For example, in FIG. 7b, the HARQ-ACK feedback window of the PUCCH corresponding to the SPS PDSCH may be configured as {3, 4, 5, 6}, meaning that when reporting HARQ-ACK at time unit n, the terminal further needs to report HARQ-ACKs that are reported in time units {n-6, n-5, n-4, n-3} before time unit n, that is, HARQ-ACKs that respectively correspond to PDSCHs 1 to 4 as shown in FIG. 7b.

In addition, in FIG. 7b, if the terminal has also received a downlink grant (DL grant) which has scheduled a PUCCH and has indicated a HARQ-ACK feedback window as {1, 2, 3}, the terminal needs to report HARQ-ACKs that reported in time units that are 3 time units, 2 time units or 1 time unit backward from a time unit in which the PUCCH scheduled by the DL grant is located, that is, HARQ-ACKs that respectively correspond to PDSCHs 5 to 7 and PDSCHs 1 to 4 as shown in FIG. 7b. When the terminal is reporting HARQ-ACK on PUCCH2, HARQ-ACK bits may be used to construct a HARQ-ACK codebook according to a reception time order of PDSCHs or by concatenating bits of HARQ-ACKs carried in PUCCHs that are within a feedback time window.

FIG. 8 is a schematic flowchart of a feedback information transmission method 800 according to an example embodiment of this application. The method 800 may be applied without limitation to a network device, and specifically may be performed by software and/or hardware installed on the network device. The method 800 may include at least the following steps.

S810. Send feedback indication information.

The feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window.

For a specific implementation process of S810, reference may be made to the detailed descriptions in the foregoing S210 and S310. To avoid repetition, details are not described again in this embodiment.

In the feedback information transmission method 800 provided in this embodiment, the network device sends feedback indication information to the terminal so as to indicate whether the terminal is to transmit target feedback information, where the target feedback information is feedback information that is reported by the terminal within a target time window, or the target feedback information is feedback information corresponding to a first downlink transmission that is received by the terminal within the target time window. In this way, the terminal can report the target feedback information based on the received feedback indication information, effectively increasing feedback occasions for the terminal to report target feedback information, resolving the problem that feedback information cannot be delivered to the network device because feedback information is discarded due to collisions with DL symbols or transmission of feedback information is canceled due to overlap with high-priority channels/signals, guaranteeing communication performance.

As a possible implementation of this application, the feedback indication information is transmitted in target downlink control information DCI, or the feedback indication information is configured by higher-layer signaling.

As another possible implementation of this application, the first downlink transmission includes at least one of the following (1) to (4).
(1) Physical downlink shared channel PDSCH that is scheduled to be transmitted within the target time window.
(2) Physical downlink control channel PDCCH that is transmitted within the target time window.
(3) PDSCH that is preconfigured to be transmitted within the target time window.
(4) PDSCH that corresponds to a candidate PDSCH reception occasion within the target time window.

As still another possible implementation of this application, the target time window is determined in at least one of the following manners: being configured by a higher layer; being configured by pre-definition; being implicitly obtained; and being indicated by DCI.

As still another possible implementation of this application, in a case that the target time window is an absolute time, the target feedback information is any one of the following (1) and (2).
(1) Feedback information that is reported within a first duration before a designated time.
(2) Feedback information corresponding to the first downlink transmission that is received within the first duration before the designated time.

The first duration is determined based on the absolute time. The designated time includes any one of the following (a) to (j).
(a) Start time or end time of target DCI.
(b) Start time or end time of a first uplink transmission scheduled by the target DCI, wherein the first uplink transmission includes a PUCCH or a PUSCH.
(c) Start time or end time of a time unit in which the first uplink transmission scheduled by the target DCI is located.
(d) Start time or end time of a downlink transmission scheduled by the target DCI.
(e) Start time or end time of a time unit in which the downlink transmission scheduled by the target DCI is located.
(f) Start time or end time of a second uplink transmission.
(g) Start time or end time of a time unit in which the second uplink transmission is located.
(h) Start time or end time of a second downlink transmission.
(i) Start time or end time of a time unit in which the second downlink transmission is located.
(j) Start time or end time of a time unit in which the target DCI is located.

As still another possible implementation of this application, in a case that the target time window includes at least one time unit, the target feedback information is any one of the following (1) and (2).
(1) Feedback information that is reported within a first quantity of time units before a designated time unit.
(2) Feedback information corresponding to the first downlink transmission that is received within the first quantity of time units before the designated time unit.

The first quantity is determined based on a quantity of time units included in the target time window. The designated time unit includes any one of the following (a) to (c).
(a) Time unit to which a target symbol corresponding to target DCI belongs, where the target symbol is a start symbol or an end symbol.
(b) Time unit corresponding to a first uplink transmission scheduled by the target DCI.
(c) Start time or end time of a first downlink transmission scheduled by the target DCI.

As still another possible implementation of this application, the time unit is a slot, a sub-slot, a symbol set, or a symbol. In addition, the time unit is an uplink time unit or a downlink time unit.

The uplink time unit is at least one of the following (1) to (4).
(1) Time unit that is semi-persistently configured as an uplink time unit.
(2) Time unit that is indicated as an uplink time unit by a dynamic slot format indication SFI.
(3) Time unit that includes an uplink symbol and/or a flexible symbol and that is configured semi-persistently.
(4) Time unit that includes an uplink symbol and/or a flexible symbol and that is indicated by the dynamic SFI.

Correspondingly, the downlink time unit is at least one of the following (1) to (4).
(1) Time unit that is semi-persistently configured as a downlink time unit.
(2) Time unit that is indicated as a downlink time unit by the dynamic SFI.
(3) Time unit that includes a downlink symbol and/or a flexible symbol and that is configured semi-persistently.
(4) Time unit that includes a downlink symbol and/or a flexible symbol and that is indicated by the dynamic SFI.

As still another implementation of this application, in a case that the target feedback information is feedback information corresponding to a first downlink transmission that is scheduled within a second duration before a first uplink transmission is triggered, the first downlink transmission is a downlink transmission that satisfies a preset processing time.

As still another implementation of this application, the target feedback information includes HARQ-ACK information corresponding to semi-persistently scheduled SPS PDSCH.

As still another implementation of this application, the target feedback information is feedback information having an indication identifier, where the indication identifier is indicated in the target DCI, or the indication identifier is the same as an identifier corresponding to a HARQ-ACK for a PDSCH scheduled by the target DCI. The indication identifier includes a codebook index and/or priority information.

It can be understood that for specific implementation processes of the foregoing implementations, reference may be made to the detailed description of the foregoing feedback information transmission method 200 and/or 300. To avoid repetition, details are not described again in this implementation.

It should be noted that the feedback information transmission method 200, 300, 600, or 800 provided in the embodiments of this application may be performed by a feedback information transmission apparatus or a control module for performing the feedback information transmission method 200, 300, 600, or 800 in the feedback information transmission apparatus. In subsequent descriptions, in an embodiment of this application, the feedback information transmission apparatus provided in this embodiment of this application is described using an example in which the feedback information transmission apparatus performs the feedback information transmission method 200, 300, 600, or 800.

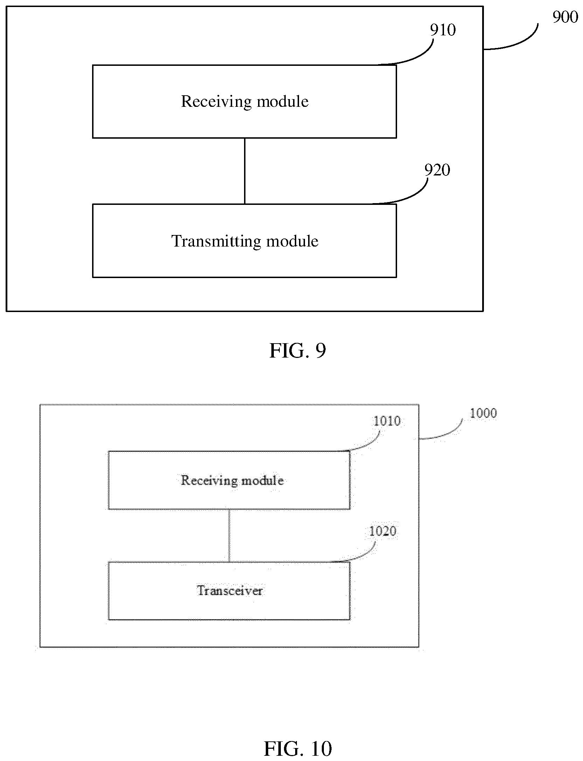

As shown in FIG. 9, an example embodiment of this application further provides a feedback information transmission apparatus 900. The apparatus 900 includes: a receiving module 910, configured to receive feedback indication information, where the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window; and a transmitting module 920, configured to: in a case that the feedback indication information indicates the terminal to transmit the target feedback information, transmit the target feedback information.

As a possible implementation, the feedback indication information is transmitted in target downlink control information DCI, or the feedback indication information is configured by higher-layer signaling.

As a possible implementation, the first downlink transmission includes at least one of the following: physical downlink shared channel PDSCH that is scheduled to be transmitted within the target time window; physical downlink control channel PDCCH that is transmitted within the target time window; PDSCH that is preconfigured to be transmitted within the target time window; and PDSCH that corresponds to a candidate PDSCH reception occasion within the target time window.

As a possible implementation, the target time window is determined in at least one of the following manners: being configured by a higher layer; being configured by pre-definition; being implicitly obtained; and being indicated by DCI.

As a possible implementation, in a case that the target time window is an absolute time, the target feedback information is any one of the following: feedback information that is reported within a first duration before a designated time; and feedback information corresponding to the first downlink transmission that is received within the first duration before the designated time. The first duration is determined based on the absolute time. The designated time includes any one of the following: a start time or an end time of target DCI; a start time or an end time of a time unit in which the target DCI is located; a start time or an end time of a first uplink transmission scheduled by the target DCI; a start time or an end time of a time unit in which the first uplink transmission scheduled by the target DCI is located; a start time or an end time of a downlink transmission scheduled by the target DCI; a start time or an end time of a time unit in which the downlink transmission scheduled by the target DCI is located; a start time or an end time of a second uplink transmission; a start time or an end time of a time unit in which the second uplink transmission is located; a start time or an end time of a second downlink transmission; and a start time or an end time of a time unit in which the second downlink transmission is located.

As a possible implementation, in a case that the target time window includes at least one time unit, the target feedback information is any one of the following: feedback information that is reported within a first quantity of time units before a designated time unit; and feedback information corresponding to the first downlink transmission that is received within the first quantity of time units before the designated time unit. The first quantity is determined based on a quantity of time units included in the target time window. The designated time unit includes any one of the following: a time unit to which a target symbol corresponding to target DCI belongs, where the target symbol is a start symbol or an end symbol; a time unit corresponding to a first uplink transmission scheduled by the target DCI; and a start time or an end time of a first downlink transmission scheduled by the target DCI.

As a possible implementation, the time unit is any one of the following: an uplink time unit; and
a downlink time unit.

As a possible implementation, the uplink time unit is at least one of the following: a time unit that is configured as an uplink time unit by higher-layer signaling; a time unit that is indicated as an uplink time unit by a dynamic slot format indication SFI; a time unit that includes an uplink symbol and/or a flexible symbol and that is configured by higher-layer signaling; and a time unit that includes an uplink symbol and/or a flexible symbol and that is indicated by the dynamic SFI.

The downlink time unit is at least one of the following: a time unit that is configured as a downlink time unit by higher-layer signaling; a time unit that is indicated as a downlink time unit by the dynamic SFI; a time unit that includes a downlink symbol and/or a flexible symbol and that is configured by higher-layer signaling; and a time unit that includes a downlink symbol and/or a flexible symbol and that is indicated by dynamic SFI.

As a possible implementation, the time unit is a slot, a sub-slot, a symbol set or a symbol.

As a possible implementation, the first uplink transmission includes a PUCCH or a PUSCH.

As a possible implementation, in a case that the target feedback information is feedback information corresponding to a first downlink transmission that is scheduled within a second duration before a first uplink transmission is triggered, the first downlink transmission is a downlink transmission that satisfies a preset processing time.

As a possible implementation, the transmitting module is configured to: in a case that a target PDSCH has been scheduled by the target DCI, transmit the target feedback information and feedback information corresponding to the target PDSCH on a same time domain resource.

As a possible implementation, the target feedback information includes HARQ-ACK information corresponding to semi-persistent scheduling SPS PDSCH.

As a possible implementation, the target feedback information is feedback information having an indication identifier, where the indication identifier is indicated in the target DCI, or the indication identifier is the same as an identifier corresponding to a HARQ-ACK for a PDSCH scheduled by the target DCI.

As a possible implementation, the indication identifier includes a codebook index and/or priority information.

As a possible implementation, the transmitting module 920 is further configured to: in a case that there are multiple pieces of target feedback information, perform at least one of the following: sorting the target feedback information according to a feedback time order of the target feedback information; sorting the target feedback information by a target cell index, where the target cell index is an index of a serving cell to which a downlink transmission corresponding to the target feedback information belongs; sorting the target feedback information according to a transmission time order of the downlink transmissions corresponding to the target feedback information; and concatenating the target feedback information.

As a possible implementation, the transmitting module 920 is configured to: in a case that there are multiple pieces of same first feedback information that are transmitted in the target feedback information, transmit at least one piece of the first feedback information and other feedback information except the multiple pieces of first feedback information included in the target feedback information.

The feedback information transmission apparatus 900 in this embodiment of this application may be an apparatus, or may be a component, an integrated circuit, or a chip in a terminal. The apparatus may be a mobile terminal or a non-mobile terminal. For example, the mobile terminal may include but is not limited to a type of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The feedback information transmission apparatus 900 in this embodiment of this application may be an apparatus with an operating system. The operating system may be an Android (Android) operating system, an iOS operating system, or other possible operating systems, and is not specifically limited in this embodiment of this application.

The feedback information transmission apparatus 900 provided in this embodiment of this application can implement the processes implemented in the method embodiments in FIG. 2 to FIG. 6, with the same technical effects achieved. To avoid repetition, details are not described herein again.

FIG. 10 is a block diagram of a feedback information transmission apparatus 900 according to an example embodiment of this application. The apparatus 1000 includes: a sending module 1010, configured to send feedback indication information, where the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window; and a transceiver 1020.

As a possible implementation, the feedback indication information is transmitted in target downlink control information DCI, or the feedback indication information is configured by higher-layer signaling.

As a possible implementation, the first downlink transmission includes at least one of the following: physical downlink shared channel PDSCH that is scheduled to be transmitted within the target time window; physical downlink control channel PDCCH that is transmitted within the target time window; PDSCH that is preconfigured to be transmitted within the target time window; and PDSCH that corresponds to a candidate PDSCH reception occasion within the target time window.

As a possible implementation, the target time window is determined in at least one of the following manners: being configured by a higher layer; being configured by pre-definition; being implicitly obtained; and being indicated by DCI.

As a possible implementation, in a case that the target time window is an absolute time, the target feedback information is any one of the following: feedback information that is reported within a first duration before a designated time; and feedback information corresponding to the first downlink transmission that is received within the first duration before the designated time. The first duration is determined based on the absolute time. The designated time includes any one of the following: a start time or an end time of target DCI; a start time or an end time of a time unit in which the target DCI is located; a start time or an end time of a first uplink transmission scheduled by the target DCI; a start time or an end time of a time unit in which the first uplink transmission scheduled by the target DCI is located; a start time or an end time of a downlink transmission scheduled by the target DCI; a start time or an end time of a time unit in which the downlink transmission scheduled by the target DCI is located; a start time or an end time of a second uplink transmission; a start time or an end time of a time unit in which the second uplink transmission is located; a start time or an end time of a second downlink transmission; and a start time or an end time of a time unit in which the second downlink transmission is located.

As a possible implementation, in a case that the target time window includes at least one time unit, the target feedback information is any one of the following: feedback information that is reported within a first quantity of time units before a designated time unit; and feedback information corresponding to the first downlink transmission that is received within the first quantity of time units before the designated time unit. The first quantity is determined based on a quantity of time units included in the target time window. The designated time unit includes any one of the following: a time unit to which a target symbol corresponding to target DCI belongs, where the target symbol is a start symbol or an end symbol; a time unit corresponding to a first uplink transmission scheduled by the target DCI; and a start time or an end time of a first downlink transmission scheduled by the target DCI.

As a possible implementation, the time unit is any one of the following: an uplink time unit; and a downlink time unit.

As a possible implementation, the uplink time unit is at least one of the following: a time unit that is configured as an uplink time unit by higher-layer signaling; a time unit that is indicated as an uplink time unit by a dynamic slot format indication SFI; a time unit that includes an uplink symbol and/or a flexible symbol and that is configured by higher-layer signaling; and a time unit that includes an uplink symbol and/or a flexible symbol and that is indicated by the dynamic SFI.

The downlink time unit is at least one of the following: a time unit that is configured as a downlink time unit by higher-layer signaling; a time unit that is indicated as a downlink time unit by the dynamic SFI; a time unit that includes a downlink symbol and/or a flexible symbol and that is configured by higher-layer signaling; and a time unit that includes a downlink symbol and/or a flexible symbol and that is indicated by dynamic SFI.

As a possible implementation, the time unit is a slot, a sub-slot, a symbol set or a symbol.

As a possible implementation, the first uplink transmission includes a PUCCH or a PUSCH.

As a possible implementation, in a case that the target feedback information is feedback information corresponding to a first downlink transmission that is scheduled within a second duration before a first uplink transmission is triggered, the first downlink transmission is a downlink transmission that satisfies a preset processing time.

As a possible implementation, the target feedback information includes HARQ-ACK information corresponding to semi-persistent scheduling SPS PDSCH.

As a possible implementation, the target feedback information is feedback information having an indication identifier, where the indication identifier is indicated in the target DCI, or the indication identifier is the same as an identifier corresponding to a HARQ-ACK for a PDSCH scheduled by the target DCI.

As a possible implementation, the indication identifier includes a codebook index and/or priority information.

The feedback information transmission apparatus 900 in this embodiment of this application may be an apparatus, or may be a component, an integrated circuit, or a chip in a network device. This apparatus may be a base station, which is not specifically limited in this embodiment of this application. The feedback information transmission apparatus provided in this embodiment of this application can implement the processes implemented in the method embodiment in FIG. 7, with the same technical effects achieved. To avoid repetition, details are not described herein again.

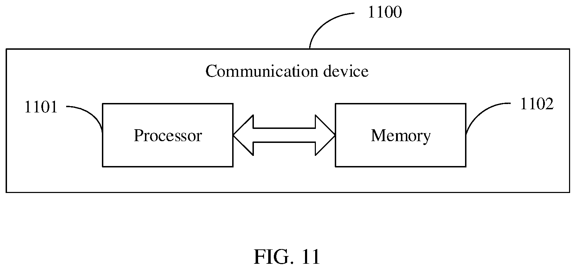

As shown in FIG. 11, an embodiment of this application further provides a communication device 1100, including a processor 1101, a memory 1102, a program or instructions stored in the memory 1102 and executable on the processor 1101. For example, when the communication device 1100 is a terminal, the program or instructions are executed by the processor 1101 to implement the processes of the foregoing feedback information transmission method embodiment, with the same technical effects achieved. When the communication device 1100 is a network device, the program or instructions are executed by the processor 1101 to implement the processes of the foregoing feedback information transmission method embodiment, with the same technical effects achieved. To avoid repetition, details are not described herein again.

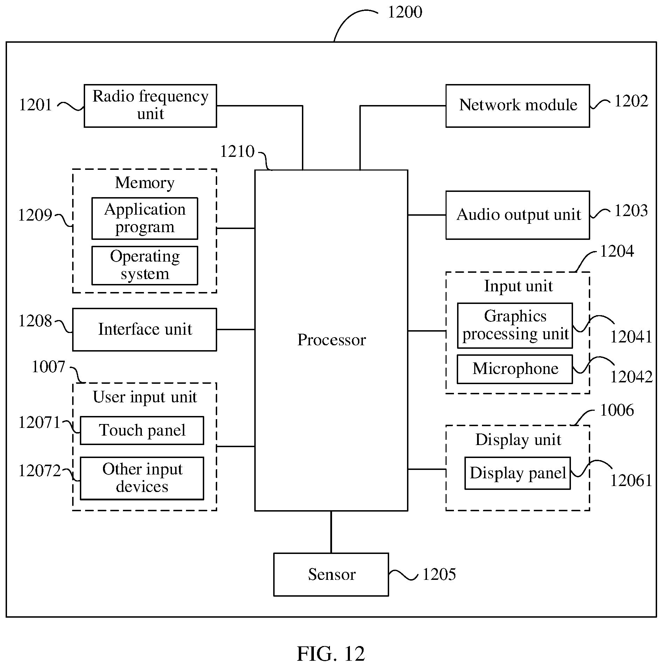

In a possible implementation, the communication device 1100 may be a terminal. FIG. 12 is a schematic diagram of a hardware structure of a terminal 1200 according to an example embodiment of this application. The terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (such as a battery) for supplying power to the components. The power supply may be logically connected to the processor 1210 via a power management system. In this way, functions such as charge management, discharge management, and power consumption management are implemented via the power management system. The structure of the terminal shown in FIG. 12 does not constitute any limitation on the terminal. The terminal may include more or fewer components than shown in the figure, or combine some of the components, or have different arrangements of the components. Details are not described herein again.

It can be understood that in this embodiment of this application, the input unit 1204 may include a graphics processing unit (Graphics Processing Unit, GPU) 1041 and a microphone 12042. The graphics processing unit 12041 processes image data of a static picture or video acquired by an image capture apparatus (for example, camera) in a picture capture mode or video capture mode. The display unit 1206 may include a display panel 12061, and the display panel 12061 may be configured in a form of a liquid crystal display, an organic light-emitting diode, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function button (such as a volume control button or a power button), a trackball, a mouse, and a joystick. Details are not described herein.

In this embodiment of this application, the radio frequency unit 1201 receives downlink data from a network device, and then sends the downlink data to the processor 1210 for processing; and also sends uplink data to the network device. Generally, the radio frequency unit 1201 includes but is not limited to an antenna, at least one amplifier, a transceiver, a coupler, a low noise amplifier, and a duplexer.

The memory 1209 may be configured to store software programs or instructions and various data. The memory 1209 may mainly include a program or instruction storage region and a data storage region. The program or instruction storage region may store an operating system, an application program or instructions required by at least one function (for example, an audio play function or an image play function), and the like. In addition, the memory 1209 may include a high-speed random access memory, and may further include a non-volatile memory. The non-volatile memory may be a read-only memory (read-only memory, ROM), a programmable read-only memory (programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, flash storage device, or other volatile solid-state storage device.

The processor 1210 may include one or more processing units. Optionally, the processor 1210 may integrate an application processor and a modem processor. The application processor mainly processes an operating system, user interface, application programs or instructions, and the like. The modem processor mainly processes wireless communication, for example, being a baseband processor. It can be understood that the modem processor may alternatively be not integrated in the processor 1210.

The processor 1210 is configured to: receive feedback indication information, where the feedback indication information is used to indicate whether the terminal is to transmit target feedback information, the target feedback information is feedback information that is reported by the terminal within a target time window, or the target feedback information is feedback information corresponding to a first downlink transmission that is received by the terminal within the target time window; and in a case that the feedback indication information indicates the terminal to transmit the target feedback information, transmit the target feedback information.

In this embodiment, the terminal receives the feedback indication information and transmits the target feedback information in the case that the feedback indication information indicates the terminal to transmit the target feedback information, where the target feedback information is the feedback information that is reported by the terminal within the target time window, or the target feedback information is the feedback information corresponding to the first downlink transmission that is received by the terminal within the target time window. In this way, for one, in this embodiment, the terminal can be triggered by the feedback indication information to transmit the target feedback information, effectively increasing feedback occasions for the terminal to report target feedback information, thereby guaranteeing effective reporting of the target feedback information. For another, this embodiment further effectively resolves the problem that feedback information cannot be delivered to a network device because feedback information is discarded due to collisions with DL symbols or transmission of feedback information is canceled due to overlap with high-priority channels/signals, guaranteeing communication performance.

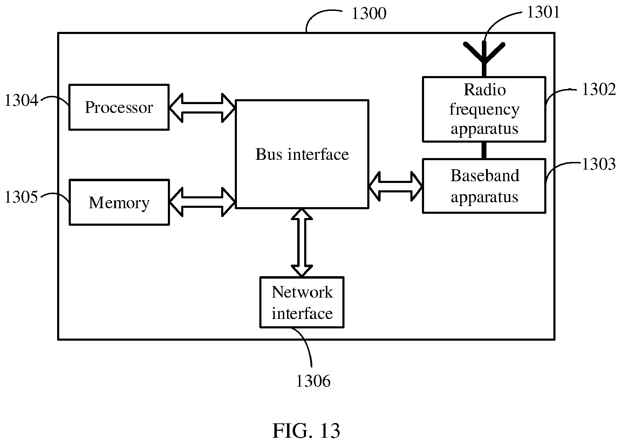

In another implementation, the communication device 1100 may alternatively be a network device. FIG. 13 is a schematic diagram of a hardware structure of a network device for implementing an embodiment of this application. The network device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information via the antenna 1301, and sends the received information to the baseband apparatus 1303 for processing. In a downlink direction, the baseband apparatus 1303 processes to-be-sent information, and sends the information to the radio frequency apparatus 1302; and the radio frequency apparatus 1302 processes the information received and then sends the information via the antenna 1301.

The band processing apparatus may be located in the baseband apparatus 1303. The method performed by the network device in the foregoing embodiment may be implemented by the baseband apparatus 1303, and the baseband apparatus 1303 includes a processor 1304 and a memory 1305.

The baseband apparatus 1303 may include, for example, at least one baseband board, where a plurality of chips are disposed on the baseband board. As shown in FIG. 13, one of the chips, for example, the processor 1304, is connected to the memory 1305, to invoke the program in the memory 1305 so as to perform the operations of the network device as given in the foregoing method embodiment.

The baseband apparatus 1303 may further include a network interface 1306 configured to exchange information with the radio frequency apparatus 1302, where the interface is, for example, a common public radio interface (common public radio interface, CPRI for short).

Specifically, the network device in this embodiment of this application further includes: instructions or a program stored in the memory 1305 and executable on the processor 1304. The processor 1304 invokes the instructions or program in the memory 1305 to execute the method executed by the modules shown in FIG. 10, with the same technical effects achieved. To avoid repetition, details are not described herein again.

An embodiment of this application further provides a readable storage medium, where a program or instructions are stored in the readable storage medium. When the program or instructions are executed by a processor, the processes of the foregoing feedback information transmission method embodiment can be implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions of a network device to implement the processes of the foregoing feedback information transmission method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product. The computer program product includes a processor, a memory, and a program or instructions stored in the memory and executable on the processor. When the program or instructions are executed by the processor, the processes of the foregoing feedback information transmission method embodiment are implemented, with the same technical effects achieved. To avoid repetition, details are not described herein again.

It should be noted that in this specification, the terms "include", "comprise", or any of their variants are intended to cover a non-exclusive inclusion such that a process, method, article, or apparatus that includes a series of elements not only includes those elements but also includes other elements that are not expressly listed, or further includes elements inherent to such process, method, article, or apparatus. In absence of more constraints, an element preceded by "includes a/an..." does not preclude the presence of other identical elements in the process, method, article, or apparatus that includes the element. In addition, it should be noted that the scope of the method and apparatus in the implementations of this application is not limited to executing functions in the order shown or discussed, but may also include executing functions in a substantially simultaneous manner or in a reverse order depending on the functions involved. For example, the described method may be performed in an order different from that described, and various steps may be added, omitted, or combined. In addition, features described with reference to some examples may be combined in other examples.

From the foregoing description of the implementations, persons skilled in the art may clearly understand that the method in the foregoing embodiments may be implemented by software in combination with a necessary general hardware platform, or certainly may be implemented by hardware. However, in many cases, the former is a preferred implementation. Based on such understanding, the technical solutions of this application essentially, or the part contributing to the prior art may be implemented in a form of a software product. The computer software product is stored in a storage medium (such as ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing has described the embodiments of this application with reference to the accompanying drawings. However, this application is not limited to the foregoing specific implementations. The foregoing specific implementations are illustrative rather than restrictive. Inspired by this application, persons of ordinary skill in the art may develop many other forms without departing from principles of this application and the protection scope of the claims, and all such forms fall within the protection scope of this application.

## Claims

1. A feedback information transmission method, performed by a terminal, wherein the method comprises:
receiving feedback indication information, wherein the feedback indication information is used to indicate whether the terminal is to transmit target feedback information, the target feedback information is feedback information that is reported by the terminal within a target time window, or the target feedback information is feedback information corresponding to a first downlink transmission that is received by the terminal within the target time window; and
in a case that the feedback indication information indicates the terminal to transmit the target feedback information, transmitting the target feedback information.

2. The method according to claim 1, wherein the feedback indication information is transmitted in target downlink control information DCI, or the feedback indication information is configured by higher-layer signaling.

3. The method according to claim 1, wherein the first downlink transmission comprises at least one of following:
physical downlink shared channel PDSCH that is scheduled to be transmitted within the target time window;
physical downlink control channel PDCCH that is transmitted within the target time window;
PDSCH that is preconfigured to be transmitted within the target time window; and
PDSCH that corresponds to a candidate PDSCH reception occasion within the target time window.

4. The method according to claim 1, wherein the target time window is determined in at least one of following manners:
being configured by a higher layer;
being configured by pre-definition;
being implicitly obtained; and
being indicated by DCI.

5. The method according to claim 1, wherein in a case that the target time window is an absolute time, the target feedback information is any one of following:
feedback information that is reported within a first duration before a designated time; and
feedback information corresponding to the first downlink transmission that is received within the first duration before the designated time; wherein
the first duration is determined based on the absolute time; and the designated time comprises any one of following:
a start time or an end time of target DCI;
a start time or an end time of a time unit in which the target DCI is located;
a start time or an end time of a first uplink transmission scheduled by the target DCI;
a start time or an end time of a time unit in which the first uplink transmission scheduled by the target DCI is located;
a start time or an end time of a downlink transmission scheduled by the target DCI;
a start time or an end time of a time unit in which the downlink transmission scheduled by the target DCI is located;
a start time or an end time of a second uplink transmission;
a start time or an end time of a time unit in which the second uplink transmission is located;
a start time or an end time of a second downlink transmission; and
a start time or an end time of a time unit in which the second downlink transmission is located.

6. The method according to claim 1, wherein in a case that the target time window comprises at least one time unit, the target feedback information is any one of following:
feedback information that is reported within a first quantity of time units before a designated time unit; and
feedback information corresponding to the first downlink transmission that is received within the first quantity of time units before the designated time unit; wherein
the first quantity is determined based on a quantity of time units comprised in the target time window; and the designated time unit comprises any one of following:
a time unit to which a target symbol corresponding to target DCI belongs, wherein the target symbol is a start symbol or an end symbol;
a time unit corresponding to a first uplink transmission scheduled by the target DCI; and
a start time or an end time of a first downlink transmission scheduled by the target DCI.

7. The method according to claim 6, wherein the time unit is any one of following:
an uplink time unit; and
a downlink time unit.

8. The method according to claim 7, wherein the uplink time unit is at least one of following:
a time unit that is configured as an uplink time unit by higher-layer signaling;
a time unit that is indicated as an uplink time unit by a dynamic slot format indication SFI;
a time unit that comprises an uplink symbol and/or a flexible symbol and that is configured by higher-layer signaling; and
a time unit that comprises an uplink symbol and/or a flexible symbol and that is indicated by the dynamic SFI; and
the downlink time unit is at least one of following:
a time unit that is configured as a downlink time unit by higher-layer signaling;
a time unit that is indicated as a downlink time unit by the dynamic SFI;
a time unit that comprises a downlink symbol and/or a flexible symbol and that is configured by higher-layer signaling; and
a time unit that comprises a downlink symbol and/or a flexible symbol and that is indicated by the dynamic SFI.

9. The method according to any one of claims 6 to 8, wherein the time unit is a slot, a sub-slot, a symbol set or a symbol.

10. The method according to claim 5 or 6, wherein the first uplink transmission comprises a PUCCH or a PUSCH.

11. The method according to claim 5 or 6, wherein in a case that the target feedback information is feedback information corresponding to a first downlink transmission that is scheduled within a second duration before a first uplink transmission is triggered, the first downlink transmission is a downlink transmission that satisfies a preset processing time.

12. The method according to claim 5 or 6, wherein the transmitting the target feedback information comprises:
in a case that a target PDSCH has been scheduled by the target DCI, transmitting the target feedback information and feedback information corresponding to the target PDSCH on a same time domain resource.

13. The method according to claim 1, wherein the target feedback information comprises HARQ-ACK information corresponding to semi-persistent scheduling SPS PDSCH.

14. The method according to any one of claims 1 to 13, wherein the target feedback information is feedback information having an indication identifier, wherein the indication identifier is indicated in the target DCI, or the indication identifier is same as an identifier corresponding to a HARQ-ACK for a PDSCH scheduled by the target DCI.

15. The method according to claim 14, wherein the indication identifier comprises a codebook index and/or priority information.

16. The method according to any one of claims 1 to 13, wherein before the transmitting the target feedback information, the method further comprises:
in a case that there are multiple pieces of target feedback information, performing at least one of following:
sorting the target feedback information according to a feedback time order of the target feedback information;
sorting the target feedback information by a target cell index, wherein the target cell index is an index of a serving cell to which a downlink transmission corresponding to the target feedback information belongs;
sorting the target feedback information according to a transmission time order of the downlink transmissions corresponding to the target feedback information; and
concatenating the target feedback information.

17. The method according to any one of claims 1 to 13, wherein the transmitting the target feedback information comprises:
in a case that there are multiple pieces of same first feedback information that are reported in the target feedback information, transmitting at least one piece of the first feedback information and other feedback information except the multiple pieces of first feedback information included in the target feedback information.

18. A feedback information transmission method, performed by a network device, wherein the method comprises:
sending feedback indication information, wherein the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window.

19. The method according to claim 18, wherein the first downlink transmission comprises at least one of following:
physical downlink shared channel PDSCH that is scheduled to be transmitted within the target time window;
physical downlink control channel PDCCH that is transmitted within the target time window;
PDSCH that is preconfigured to be transmitted within the target time window; and
PDSCH that corresponds to a candidate PDSCH reception occasion within the target time window.

20. The method according to claim 18, wherein in a case that the target time window is an absolute time, the target feedback information is any one of following:
feedback information that is reported within a first duration before a designated time; and
feedback information corresponding to the first downlink transmission that is received within the first duration before the designated time; wherein
the first duration is determined based on the absolute time; and the designated time comprises any one of following:
a start time or an end time of target DCI;
a start time or an end time of a time unit in which the target DCI is located;
a start time or an end time of a first uplink transmission scheduled by the target DCI;
a start time or an end time of a time unit in which the first uplink transmission scheduled by the target DCI is located;
a start time or an end time of a downlink transmission scheduled by the target DCI;
a start time or an end time of a time unit in which the downlink transmission scheduled by the target DCI is located;
a start time or an end time of a second uplink transmission;
a start time or an end time of a time unit in which the second uplink transmission is located;
a start time or an end time of a second downlink transmission; and
a start time or an end time of a time unit in which the second downlink transmission is located.

21. The method according to claim 18, wherein in a case that the target time window comprises at least one time unit, the target feedback information is any one of following:
feedback information that is reported within a first quantity of time units before a designated time unit; and
feedback information corresponding to the first downlink transmission that is received within the first quantity of time units before the designated time unit; wherein
the first quantity is determined based on a quantity of time units comprised in the target time window; and the designated time unit comprises any one of following:
a time unit to which a target symbol corresponding to target DCI belongs, wherein the target symbol is a start symbol or an end symbol;
a time unit corresponding to a first uplink transmission scheduled by the target DCI; and
a start time or an end time of a first downlink transmission scheduled by the target DCI.

22. The method according to claim 20 or 21, wherein in a case that the target feedback information is feedback information corresponding to a first downlink transmission that is scheduled within a second duration before a first uplink transmission is triggered, the first downlink transmission is a downlink transmission that satisfies a preset processing time.

23. The method according to claim 18, wherein the target feedback information comprises HARQ-ACK information corresponding to semi-persistent scheduling SPS PDSCH.

24. The method according to any one of claims 18 to 23, wherein the target feedback information is feedback information having an indication identifier, wherein the indication identifier is indicated in the target DCI, or the indication identifier is same as an identifier corresponding to a HARQ-ACK for a PDSCH scheduled by the target DCI.

25. The method according to claim 24, wherein the indication identifier comprises a codebook index and/or priority information.

26. A feedback information transmission apparatus, wherein the apparatus comprises:
a receiving module, configured to receive feedback indication information, wherein the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window; and
a transmitting module, configured to: in a case that the feedback indication information indicates the terminal to transmit the target feedback information, transmit the target feedback information.

27. The apparatus according to claim 26, wherein in a case that the target time window is an absolute time, the target feedback information is any one of following:
feedback information that is reported within a first duration before a designated time; and
feedback information corresponding to the first downlink transmission that is received within the first duration before the designated time; wherein
the first duration is determined based on the absolute time; and the designated time comprises any one of following:
a start time or an end time of target DCI;
a start time or an end time of a time unit in which the target DCI is located;
a start time or an end time of a first uplink transmission scheduled by the target DCI;
a start time or an end time of a time unit in which the first uplink transmission scheduled by the target DCI is located;
a start time or an end time of a downlink transmission scheduled by the target DCI;
a start time or an end time of a time unit in which the downlink transmission scheduled by the target DCI is located;
a start time or an end time of a second uplink transmission;
a start time or an end time of a time unit in which the second uplink transmission is located;
a start time or an end time of a second downlink transmission; and
a start time or an end time of a time unit in which the second downlink transmission is located.

28. The apparatus according to claim 26, wherein in a case that the target time window comprises at least one time unit, the target feedback information is any one of following:
feedback information that is reported within a first quantity of time units before a designated time unit; and
feedback information corresponding to the first downlink transmission that is received within the first quantity of time units before the designated time unit; wherein
the first quantity is determined based on a quantity of time units comprised in the target time window; and the designated time unit comprises any one of following:
a time unit to which a target symbol corresponding to target DCI belongs, wherein the target symbol is a start symbol or an end symbol;
a time unit corresponding to a first uplink transmission scheduled by the target DCI; and
a start time or an end time of a first downlink transmission scheduled by the target DCI.

29. The apparatus according to claim 27 or 28, wherein in a case that the target feedback information is feedback information corresponding to a first downlink transmission that is scheduled within a second duration before a first uplink transmission is triggered, the first downlink transmission is a downlink transmission that satisfies a preset processing time.

30. The apparatus according to claim 27 or 28, wherein the transmitting module is configured to: in a case that a target PDSCH has been scheduled by the target DCI, transmit the target feedback information and feedback information corresponding to the target PDSCH on a same time domain resource.

31. The apparatus according to claim 26, wherein the target feedback information comprises HARQ-ACK information corresponding to semi-persistent scheduling SPS PDSCH.

32. The apparatus according to any one of claims 26 to 31, wherein the target feedback information is feedback information having an indication identifier, wherein the indication identifier is indicated in the target DCI, or the indication identifier is same as an identifier corresponding to a HARQ-ACK for a PDSCH scheduled by the target DCI.

33. The apparatus according to claim 32, wherein the indication identifier comprises a codebook index and/or priority information.

34. The apparatus according to any one of claims 26 to 31, wherein the transmitting module is further configured to: in a case that there are multiple pieces of target feedback information, perform at least one of following:
sorting the target feedback information according to a feedback time order of the target feedback information;
sorting the target feedback information by a target cell index, wherein the target cell index is an index of a serving cell to which a downlink transmission corresponding to the target feedback information belongs;
sorting the target feedback information according to a transmission time order of the downlink transmissions corresponding to the target feedback information; and
concatenating the target feedback information.

35. The apparatus according to any one of claims 26 to 31, wherein the transmitting module is configured to: in a case that there are multiple pieces of same first feedback information that are reported in the target feedback information, transmit at least one piece of the first feedback information and other feedback information except the multiple pieces of first feedback information included in the target feedback information.

36. A feedback information transmission apparatus, wherein the apparatus comprises:
a sending module, configured to send feedback indication information, wherein the feedback indication information is used to indicate whether a terminal is to transmit target feedback information, the target feedback information is feedback information that is reported by the terminal within a target time window, or the target feedback information is feedback information corresponding to a first downlink transmission that is received by the terminal within the target time window.

37. The apparatus according to claim 36, wherein in a case that the target time window is an absolute time, the target feedback information is any one of following:
feedback information that is reported within a first duration before a designated time; and
feedback information corresponding to the first downlink transmission that is received within the first duration before the designated time; wherein
the first duration is determined based on the absolute time; and the designated time comprises any one of following:
a start time or an end time of target DCI;
a start time or an end time of a time unit in which the target DCI is located;
a start time or an end time of a first uplink transmission scheduled by the target DCI;
a start time or an end time of a time unit in which the first uplink transmission scheduled by the target DCI is located;
a start time or an end time of a downlink transmission scheduled by the target DCI;
a start time or an end time of a time unit in which the downlink transmission scheduled by the target DCI is located;
a start time or an end time of a second uplink transmission;
a start time or an end time of a time unit in which the second uplink transmission is located;
a start time or an end time of a second downlink transmission; and
a start time or an end time of a time unit in which the second downlink transmission is located.

38. The apparatus according to claim 36, wherein in a case that the target time window comprises at least one time unit, the target feedback information is any one of following:
feedback information that is reported within a first quantity of time units before a designated time unit; and
feedback information corresponding to the first downlink transmission that is received within the first quantity of time units before the designated time unit; wherein
the first quantity is determined based on a quantity of time units comprised in the target time window; and the designated time unit comprises any one of following:
a time unit to which a target symbol corresponding to target DCI belongs, wherein the target symbol is a start symbol or an end symbol;
a time unit corresponding to a first uplink transmission scheduled by the target DCI; and
a start time or an end time of a first downlink transmission scheduled by the target DCI.

39. The apparatus according to claim 37 or 38, wherein in a case that the target feedback information is feedback information corresponding to a first downlink transmission that is scheduled within a second duration before a first uplink transmission is triggered, the first downlink transmission is a downlink transmission that satisfies a preset processing time.

40. The apparatus according to claim 36, wherein the target feedback information comprises HARQ-ACK information corresponding to semi-persistent scheduling SPS PDSCH.

41. The apparatus according to any one of claims 36 to 40, wherein the target feedback information is feedback information having an indication identifier, wherein the indication identifier is indicated in the target DCI, or the indication identifier is same as an identifier corresponding to a HARQ-ACK for a PDSCH scheduled by the target DCI.

42. The apparatus according to claim 41, wherein the indication identifier comprises a codebook index and/or priority information.

43. A terminal, comprising a processor, a memory, and a program or instructions stored in the memory and executable on the processor, wherein when the program or instructions are executed by the processor, steps of the feedback information transmission method according to any one of claims 1 to 17 are implemented.

44. A network device, comprising a processor, a memory, and a program or instructions stored in the memory and executable on the processor, wherein when the program or instructions are executed by the processor, steps of the feedback information transmission method according to any one of claims 18 to 25 are implemented.

45. A readable storage medium, wherein the readable storage medium stores a program or instructions, and when the program or instructions are executed by a processor, steps of the feedback information transmission method according to any one of claims 1 to 17 or steps of the feedback information transmission method according to any one of claims 18 to 25 are implemented.
